(19) **Europäisches Patentamt**

**European Patent Office**

**Office européen des brevets**

(11) Veröffentlichungsnummer: **0 323 610 B1**

(12) # EUROPÄISCHE PATENTSCHRIFT

(45) Veröffentlichungstag der Patentschrift: **03.06.92**

(51) Int. Cl.[5]: **C02F 1/24**, C02F 11/12, B01D 21/00

(21) Anmeldenummer: **88121473.8**

(22) Anmeldetag: **22.12.88**

(54) **Verfahren und Einrichtung zum Eindicken von Abwasserschlämmen und/oder anderen organischen Schlämmen durch Trennung von Wasser und Feststoffen.**

(30) Priorität: **28.12.87 AT 3436/87**

(43) Veröffentlichungstag der Anmeldung:
**12.07.89 Patentblatt 89/28**

(45) Bekanntmachung des Hinweises auf die Patenterteilung:
**03.06.92 Patentblatt 92/23**

(84) Benannte Vertragsstaaten:
**AT CH DE ES FR GB IT LI NL SE**

(56) Entgegenhaltungen:
**CH-A- 468 938**
**DE-A- 663 960**

**"Mémento technique de l'eau", 1972, Seiten 322,421-422, Degrémont, Paris, FR**

(73) Patentinhaber: **Pfefferkorn, Herbert**
**Arlbergstrasse 101**
**A-6900 Bregenz(AT)**

(72) Erfinder: **Pfefferkorn, Herbert**
**Arlbergstrasse 101**
**A-6900 Bregenz(AT)**

(74) Vertreter: **Riebling, Peter, Dr.-Ing., Patentanwalt**
**Rennerle 10, Postfach 31 60**
**W-8990 Lindau/B.(DE)**

EP 0 323 610 B1

**Beschreibung**

Die Erfindung bezieht sich auf ein Verfahren zum Eindicken von Abwasserschlämmen und/oder anderen organischen Schlämmen durch Trennung von Wasser undFeststoffteilen sowie auf eine Einrichtung zur Durchführung des Verfahrens.

Bei der Abwasserreinigung fallen in mechanischen und chemischen Reinigungsanlagen sowie in der Nachklärung der biologischen Stufe Schlämme an. Je nach Art der ursprünglichen Verunreinigungen des Abwassers und seiner Behandlung setzen sich diese Schlämme aus mineralischen und/oder aus organischen Bestandteilen zusammen. Sie besitzen bei der Abführung aus dem Reinigungsprozeß Wassergehalte zwischen 97 und 99 %. Um diesen Wassergehalt zu reduzieren, was für die Weiterbearbeitung des Schlammes ein unabdingbares Erfordernis ist, ist es bekannt, den Schlamm in Eindickern weiterzubehandeln. Bei solchen Eindickern handelt es sich in der Regel um Rundbekken, in welchen der Schlamm mehrere Stunden bis zu einem Tag gelagert wird, und in welchem sich die Feststoffteile während dieser Zeit absetzen. In solchen Eindikkern kann der Wassergehalt auf ca. 92 bis 95 % je nach Ausgangsschlamm reduziert werden. Es sind aber auch maschinelle Einrichtungen für diese Schlammeindickung bekannt. Hiebei werden die Schlämme in Saugzellenfiltern, in Filterpressen oder in Zentrifugen weiterbehandelt, wobei den Schlämmen zur besseren Filtrierbarkeit noch Filterhilfsmittel beigefügt werden. Durch solche maschinelle Einrichtungen kann ein Filterkuchen erlangt werden mit einem Feststoffteile-Gehalt von 20 bis 25 %. Mit solchen maschinellen Hilfsmitteln kann zwar in sehr großem Ausmaß der Schlamm eingedickt werden, aber es ist wohl unschwer zu erkennen, daß solche Einrichtungen sehr teuer und aufwendig sind, und zwar sowohl was ihre Anschaffung wie auch ihre Erhaltung und ihr Betrieb betrifft. Auch die Schlammtrocknung ist hier noch zu erwähnen. Ausgefaulter Schlamm kann auch ohne maschinelle Entwässerung auf Trockenbeete gepumpt werden, jedoch sind hiezu bei großen Schlammengen wegen der langen Trocknungszeiten große Flächen notwendig. Diese notwendigen großen Flächen stehen aber in der Regel nicht zur Verfügung. Nach dem Verfahren der EP-A-0 040 887 zur Behandlung von Abwasserschlamm wird unter höherem Druck druckbegaster Abwasserschlamm durch die Entladeeinrichtung eines Druckkessels geleitet und ein halbexplosiver Druckabfall jeder Schlammmenge unmittelbar hinter der Entladeeinrichtung durchgeführt.

Die Erfindung zielt nun darauf ab, ein Verfahren vorzuschlagen, durch welches ohne Einsatz von solchen aufwendigen maschinellen Einrichtungen der anfallende Schlamm in einem hohen Ausmaß eingedickt werden kann, wozu insbesondere die in erster Stufe durchgeführte Sedimentation unter bestimmten Druckbedingungen beiträgt. Das erfindungsgemäße Verfahren ist dabei gekennzeichnet durch die Kombination jener Merkmale, die Gegenstand und Inhalt des kennzeichnenden Teiles des Patentanspruches 1 sind. Danach wird der anfallende Schlamm - es kann sich dabei um Primärschlamm oder um überschußschlamm oder um ein Gemenge aus diesen beiden Schlammarten handeln - vorerst für eine gewisse Zeit unter Druck gesetzt, wobei sich Wasser und Feststoffteile durch Sedimentation trennen. Die Verweilzeit, während der der Schlamm unter Druck gesetzt wird, ist abhängig von der Schlammart und seiner Zusammensetzung. Der durch Sedimentation hier anfallende, teilentwässerte Schlamm wird nun abgezogen und dabei unter Druck begast. Die Druckbegasung erfolgt je nach Schlammart mit atmosphärischer Luft oder auch anderen Gasarten, wie z.B. technischer Sauerstoff. Die Druckbegasung erwirkt einerseits eine Sättigung des vorentwässerten Schlammes mit Gasbläschen und vor allem den Eintrag von Sauerstoff in den biochemisch aktiven Schlamm. In der weiteren Folge wird der vorentwässerte - druckbegaste Schlamm in einen unter atmosphärischem Druck oder auch im Unterdruck stehenden Flotationsbehälter übergeleitet. Die Flotation wird dabei in der ersten Phase durch die Auftriebskräfte der den Schlammpartikel anhaftenden Gasbläschen getragen. Durch die Einwirkung der Entspannung während der Einleitung des Schlamms in den Flotationsbehälter expandieren die Gasbläschen und treiben zum größten Teil durch den Flotatschlamm nach oben ab. Gleichzeitig beginnt auch bedingt durch die kombinierte Vorbehandlung der Vorentwässerung unter Druckeinwirkung sowie der Druckbegasung ($O_2$ Eintrag) eine intensivierte biochemische Aktivität im Flotatschlamm. Diese biochemische Aktivität des Flotatschlammes fördert durch die Gaseigenproduktion (überwiegend $CO_2$) das Entwässerungsverhalten durch folgende Einwirkungen entscheidend:

1. Die Diffusion der in und an den Schlammpartikeln entstehenden Gase fördern die Abtrennung der Haft- und Kapillarwässer von den Schlammpartikeln entscheidend.

2. Je nach Schlammart und eingetragender $O_2$ Menge hält dieser biochemische Ab- und Umbauprozess im Flotatschlamm über mehrere Stunden bis Tage an, wodurch auch ein verstärktes Flotationsverhalten über diesen Zeitraum gegeben ist.

3. Bedingt durch die unter Punkt 1 und 2 erzielten Vorteile ist es auch möglich, die Gesamtstärke der Flotatschichte im Vergleich zu bekannten Flotatverfahren um ein Vielfaches zu erhöhen. Diese ERhöhung der Flotatstärke verbessert den Eindickeffekt weiters und ermöglicht auch die Flotation in einfachen Behälterformen mit kleinen Oberflächen, z.B. in einem stehenden kreiszylinderförmigen Behälter durchzuführen. Durch die Erhöhung der Flotatschichtstärke und der Gaseigenproduktion des Flotatschlammes wird auch die gesamte Auftriebskraft der im Trennwasser schwimmenden Flotatschichte erhöht, wodurch auch die Entnahme des entwässerten Flotatschlammes in einer entsprechenden Höhe über dem Wasserspiegel durchgeführt werden kann.

Der erzielbare Entwässerungseffekt wird neben der jeweiligen Schlammart vor allem auch durch die Druckbeaufschlagung sowie durch die Verweilzeit im jeweiligen Reaktionsbehälter beeinflußt. Die Druckbeaufschlagung erfolgt dabei bis max. 7 bar. Bei speziellen Schlämmen kann auch eine höhere Druckbeaufschlagung erfolgen, wobei ein Druck bis ca. 8 bar während der Sedimentation im geschlossenen Behälter aufgebracht wird.

Um die Erfindung, und zwar sowohl das Verfahren wie die zur Ausführung des Verfahrens verwendete Einrichtung zu veranschaulichen, wird sie anhand der Zeichnung näher erläutert, ohne die Erfindung auf die gezeigten Ausführungsbeispiele einzuschränken. Es zeigen:

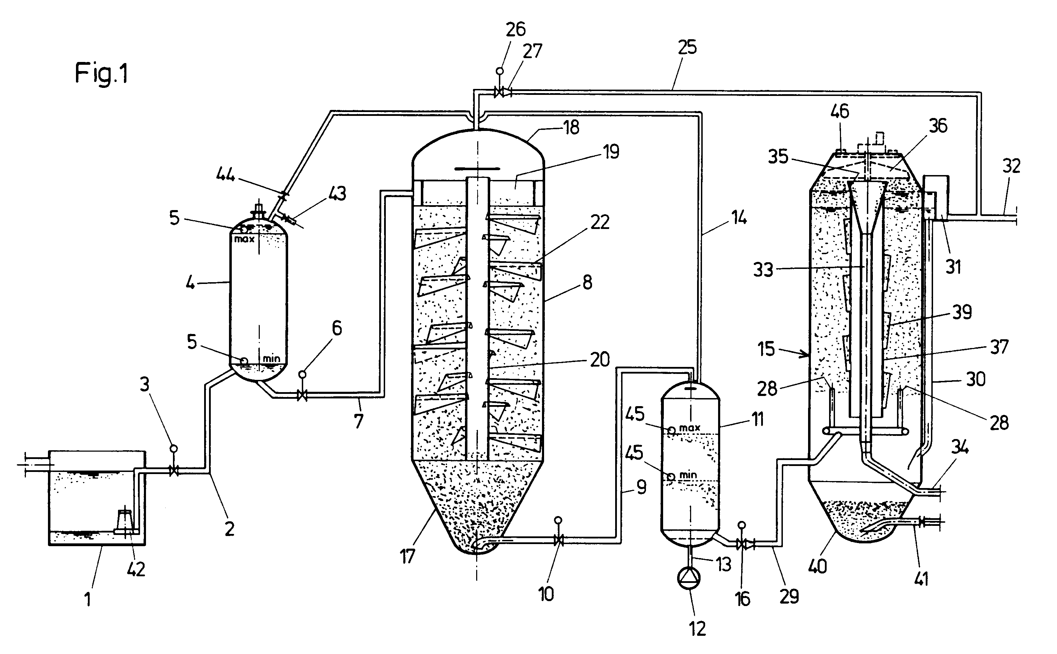

Fig. 1 schematisch den grundsätzlich Aufbau einer die erfindungsgemäße Einrichtung aufweisende Anlage, zum Teil im Schnitt.

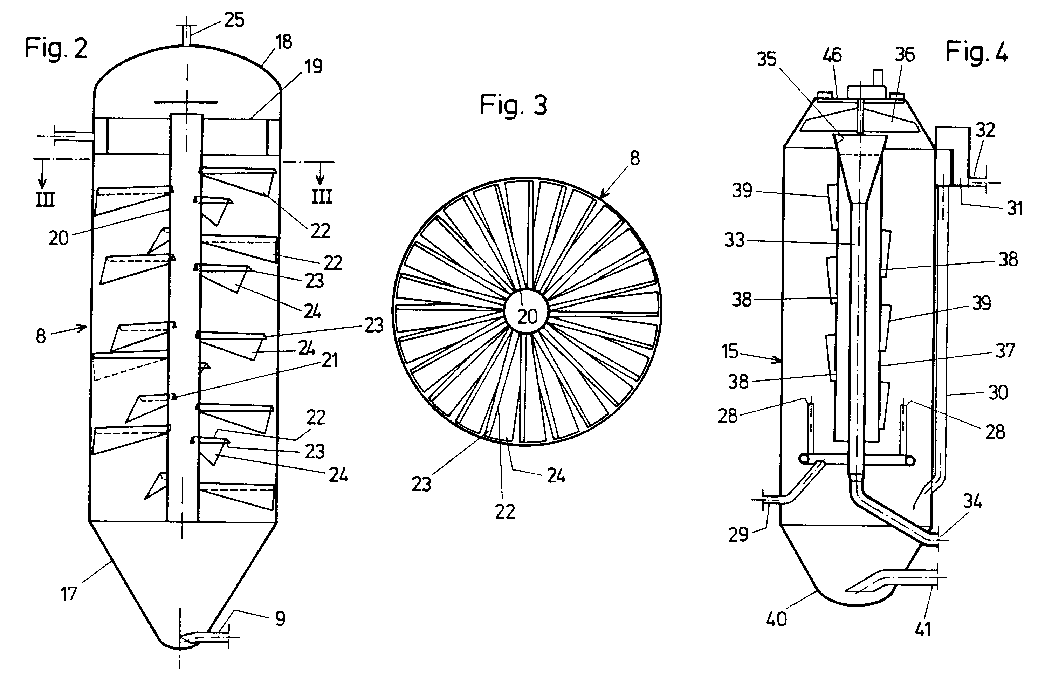

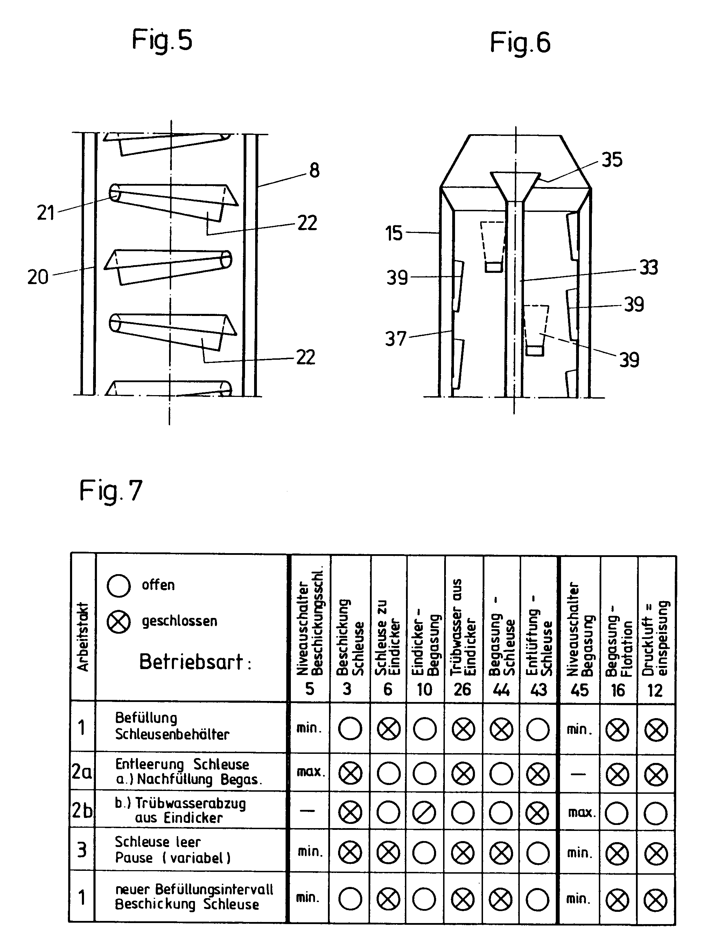

Fig. 2 einen Vertikalschnitt durch den druckbeaufschlagten Behälter (Sedimentationsbehälter);Fig. 3 einen Horizontalschnitt und eine Draufsicht auf den Behälter nach Fig. 2, und zwar gemäß der Schnittlinie III - III in Fig. 2; Fig. 4 einen Vertikalschnitt durch den drucklosen Behälter (Flotationsbehälter); Fig. 5 einen Detailvertikalschnitt durch einen Sedimentationsbehälter anderer Bauart; Fig. 7 ein Schema, das die Stellung der einzelnen Schaltglieder (Ventile, Niveauschalter) der Anlage in Abhängigkeit der einzelnen Arbeitstakte zeigt.

In Fig. 1 sind jene Anlagenteile dargestellt, die der Eindikkung des Schlammes dienen, der aus einer Abwasserreinigungsanlage anfällt, von welcher jedoch nur das Schlammsammelbecken 1 dargestellt ist, wobei hier sowohl Überschußschlamm wie auch Primärschlamm anfallen kann. Von hier führt eine Leitung 2, die mittels eines Ventiles 3 absperrbar ist in die Beschickungsschleuse 4, in welcher ein Niveauregler 5 vorgesehen ist, der zur Steuerung der Ventile in dieser Anlage dient. Eine weitere, ebenfalls durch ein Ventil 6 absperrbare Leitung 7 führt aus dem Bodenbereich der Beschickungsschleuse 4 zum druckbeaufschlagbaren Behälter 8 (Sedimentationsbehälter), wobei diese Leitung 7 in dessen oberen Bereich einmündet und dort in eine Verteilerrinne 19 beliebiger Bauart übergeht. Im Bodenbereich des druckbeaufschlagbaren Behälters 8 (Sedimentationsbehälter) liegt die Mündung einer Abzugleitung 9, ebenfalls mit einem Ventil 10 absperrbar, die anderen ends in den oberen Bereich des Begasungsbehälters 11 mündet. In den Bodenbereich des Bagasungsbehälters 11 mündet ferner eine von einem Kompressor 12 gespeiste Druckluftleitung 13. Vom Deckelbereich dieses Begasungsbehälters 11 aus führt eine Verbindungsleitung 14 zum oberen Bereich der Beschickungsschleuse 4, und diese Verbindungsleitung verbindet diese beiden Anlagenteile 4 und 11 in kommunizierender Weise. Weiters ist der Begasungsbehälter 11 mit dem drucklosen Behälter 15 (Flotationsbehälter) über die ebenfalls mit einem Ventil 16 absperrbare Zuführleitung 29 verbunden. Auch im Begasungsbehälter 11 ist ein Niveauschalter 45 vorgesehen, der die Ventile der Anlage steuert. Im Deckenbereich des Druckbehälters 8 (Sedimentationsbehälter) mündet die Ablaufleitung 25 mit eingebautem Absperrorgan 26 und Drossel 27.

Bevor auf die Arbeitsweise der Anlage eingegangen wird, werden nun im folgenden die Behälter 8 und 15 in ihrem Aufbau im einzelnen erläutert:

Der unter Druck setzbare Behälter 8 (Sedimentationsbehälter) ist turmartig ausgebildet, er ist also höher als breit und er besitzt zweckmäßigerweise einen kreisrunden Querschnitt. Sein unterer Bereich ist gebildet durch einen auf der Spitze stehenden Hohlkegel 17, in welchem auch die Mündungsöffnung der Abzugleitung 9 liegt. Dem Decke 18 benachbart mündet die Leitung 7 für den Schlammeintrag, die zweckmäßigerweise in die Verteilerrinne 19 überführt. Im Mittelbereich des Behälters 8, vorzugsweise in koaxialer Lage mit dessen Vertikalachse, ist ein rohrartiger Sammelschacht 20 angeordnet, dessen oberes Ende gegen den Deckel 18 hin offen ist. In der Wand dieses rohrartigen Schachtes 20 sind eine Vielzahl von Öffnungen 21 ausgespart. Am jeweilig oberen Rand dieser Öffnungen 21 sind rinnenartige Abdeckungen 22 angeschlossen, die im wesentlichen horizontal liegen und die nach unten hin offen sind. Die erwähnten haubenartigen Abdeckungen 22 verlaufen vom rohrartigen Schacht 20 annähernd radial zur Außenwand des Behälters 8. Der Querschnitt dieser haubenartigen Abdeckungen 22 ist v-förmig, wobei die beiden Schenkel einer jeden Abdeckung 22 ungleich hoch sind. Der eine Schenkel 23 besitzt über die achsiale Länge der Abdeckung 22 eine im wesentlichen konstante Höhe, wogegen die Höhe des anderen Schenkels 24 mit zunehmender Entfernung vom rohrartigen Schacht gegen die Wand des Behälters 8 hin zunimmt. Das ist aus den Fig.2 und 3 ersichtlich. Die Öffnungen 21 im rohrartigen Schacht 20 sind in mehr oder weniger regelmäßigen Abständen voneinander distanziert, und zwar sowohl entlang des Umfanges des Schachtes 20, wie auch über dessen vertikale Höhe, wobei diese Öffnungen 21 vorzugsweise auf einer gedachten Schraubenlinie angeordnet sind (Fig. 2). Wird der innere Aufbau des Behälters 8 von oben her betrachtet (Fig. 3 - Schnitt nach der Linie III - III in Fig. 2), so überdecken diese Abdeckungen 22 im Grundriß den Querschnitt des Behälters 8 zum überwiegenden Teil, wobei jedoch zu bedenken und zu beachten ist, daß die einzelnen Abdeckungen in unterschiedlichen Höhen liegen. Diese Abdeckungen 22 sind ferner so angeordnet, daß - im Umlauf - jeweils auf einen Schenkel 23 mit konstanter Höhe ein Schenkel 24 mit zunehmender Höhe im Wechsel aufeinander folge. Das macht Fig. 3 anschaulich . Der drucklose Behälter 15 ist ebenfalls turmartig ausgebildet und oben offen. Die in seinem Inneren liegenden Mündungsöffnungen 28 der Zuführleitung 29 sind vom Bodenbereich distanziert und liegen etwa im unteren Drittel der Höhe des Behälters 15 und sind nach oben bzw. tangential verlaufend angeordnet. Unterhalb der Mündungsöffnungen 28 ist ein Ableitungsrohr 30 angeschlossen, dessen oberes Ende in einem das Füllniveau des Behälters 15 regulierbaren Überlauf 31 mündet. Im Mittelbereich des drucklosen, oben offenen Behälters 15 ist ein vertikaler Schacht 33 vorgesehen, der an seinem unteren Ende in eine durch die Wand des Behälters 15 geführte Austragleitung 34 übergeht. Hingegen ist das obere Ende des vertikalen Schachtes 33 trichterartig nach außen erweitert und unmittelbar an diese trichterartige Erweiterung 35 schließt ein Räumer 36 an, der um eine zur Achse des Behälters 15 koaxiale Achse drehbar gelagert ist, und dessen Räumflächen zum Rand der trichterartigen Erweiterung 35 gerichtet sind. Im Niveaubereich dieses Trichters 35 ist die Wand des Behälters 15 kegelig geführt, so daß die Wand des Behälters 15 und die trichterartige Erweiterung 35 des vertikalen Schachtes 33 einen nach oben sich verjüngenden Ringraum begrenzen, wobei der obere Rand 46 des Behälters 15 oberhalb des Randes der trichterartigen Erweiterung 35 liegt. Der vertikale Schacht 33 ist ferner mit Abstand von einem Mantelrohr 37 umgeben, das sich über den größten Teil der Höhe des vertikalen Schachtes 33 erstreckt und das nach unten hin offen, nach oben hin jedoch verschlossen ist. Im Mantelrohr 37 sind ferner in mehr oder weniger regelmäßiger Verteilung Öffnungen 38 ausgespart. Am unteren und eventuell seitlichen Rand dieser Öffnungen 33 sind Leitbleche 39 angeordnet, die schalenartig ausgebildet und nach oben hin offen sind. Im Hohlkegelig ausgebildeten Boden 40 des Behälters 15 ist ferner noch eine Schlammabsaugleitung 41 angeschlossen.

Ohne vorerst den Betriebsablauf im einzelnen festzuhalten, ist aufgrund der bisherigen Versuche folgendes zu erwähnen: Der in den druckbeaufschlagbaren Behälter 8 (Sedimentationsbehälter) einbringbare Schlamm - es kann sich um Primärschlamm, um Überschußschlamm oder um ein Gemisch aus solchen Schlämmen handeln - besitzt einen Feststoffteil-Gehalt von 0,5 bis ca. 4 %. Der Schlamm in Behälter 8 wird mit Druck beaufschlagt, wobei dieser Druck ca. 6 bar beträgt. Während einer angemessenen Verweilzeit, abhängig von der Art des Schlammes, beginnt hier ein Sedimentationsvorgang, d.h. die Trennung von Wasser und Feststoffteile wird hier durch spezielle und vorstehend erläuterte Ausgestaltung des Behälters insofern begünstigt,als über die hier sich quer durch den Behälter erstreckenden rinnenförmigen Abdeckungen 22 aus den einzelnen Etagen des Schlammkuchens das Wasser seitlich abgeleitet werden kann, das Wasser also nicht die ganze Höhe des Schlammkuchens durchziehen muß. Vielmehr kann es seitlich auf relativ kurzem Wege und auf Bahnen geringen Widerstandes in den zentralen Schacht 20 gelangen und in weiterer Folge nach oben abfließen. Die angeführte Formgebung und Anordnung der Abdeckungen 22 erwirkt weiters während dem Sinken des Schlammes ein Scheereffekt im einzudickenden Schlamm, wodurch die Wasserabtrennung gefördert wird.

Für das relativ hohe Ausmaß der Eindickung, die hier durch Sedimentation erzielt werden kann, ist offenbar maßgebend der Druck, unter welchem dieser Vorgang abläuft, ferner die Abdeckrinnen 22, die sich quer durch den Behälter 8 erstrecken und durch welche das eingeschlossene Wasser sozusagen aus dem Schlammkuchen jeweils auf kürzestem Wege austreten kann, unabhängig davon, in welcher Etage des Schlammkuchens das Wasser eingeschlossen und freigegeben wird. Weiters entscheidend für das gute Sedimentationsverhalten des Schlammes ist der durch die Druckbeaufschlagung erreichte Effekt der Rücklösung der im Schlamm eingebundenen Gasteile sowie die Volumensreduzierung der kompresiblen Schlammpartikel..

Ist der Sedimentationsvorgang im Behälter 8 abgeschlossen, wird der eingedickte Schlamm über die Abzugleitung 9 und Zuführleitung 29 in den Behälter 15 übergeleitet, so passiert der Schlamm den Begasungsbehälter 11 und wird dabei unter Druck mit Sauerstoff angereichert. In der weiteren Folge wird der begaste Schlamm über die Mündungsöffnungen 28 gleichmäßig über die gesamte Grundfläche des Flotationsraumes in Behälter 15 verteilt, und beginnt hier zu flotieren, d.j., die Feststoffteile beginnen rasch aufzusteigen und treten als eingedickter Schlammkuchen über dem Rand der trichterartigen Erweiterung 35, von wo er durch den sich drehenden Räumer 36 in den zentralen Schacht 33 gestreift wird. Hier fällt der abgestrichene Schlammkuchen nach unten und wird über die Austragleitung 34 ausgebracht. Soweit sich in diesem Behälter 15 nach längerer Betriebszeit am Boden etwas Schlamm absetzen wird, ist hier noch eine Schlammabzugleitung 41 vorsorglich vorgesehen. Die Flotation, die hier in diesem Behälter 15 abläuft und durch die Wasser- und Feststoffteile getrennt werden, wird hier begünstigt durch den zentralen Schacht 33, den darin vorgesehenen Öffnungen 38 und die Leitbleche 39, die hier eine Funktion zu erfüllen haben, die durchaus gleichartig jener der Abdeckungen 22 im erstbesprochenen Behälter 8 ist. Diese Leitbleche 39 dürfen hier jedoch nicht den Behälter queren, da dadurch der Strömungswiderstand des Behälters beschränkt würde, was die Flotation behindert. Aus diesem Grund besitzen diese Leitbleche 39, bezogen auf den Durchmesser des Behälters, nur eine geringe radiale Ausdehnung, was ja auch aus den Darstellungen in denZeichnungen deutlich erkennbar ist. Dank dieser Leitbleche 39 und der Öffnungen 38 kann das aus dem hochsteigenden Schlammkuchen abgesonderte Wasser sozusagen direkt und auf kurzem Wege abgeleitet werden, die Wasserteilchen brauchen also nicht den relativ hohen Schlammkuchen durchwandern.

Nachfolgend nun der Betrieb der Anlage, wie in Fig. 1 dargestellt, näher erläutert, wobei davon ausgegangen wird, daß die Behälter gefüllt sind, wie dies die Fig. 1 veranschaulicht. Hat in der Beschickungsschleuse 4 der Niveauschalter 5 seine untere Grenzlage (min.) erreicht, so wird bei geschlossenen Ventilen 6 und 44 die Pumpe 42 im Schlammsammelbecken 1 eingeschaltet (Ventil 3 ist offen), wodurch die Beschickungsschleuse 4 nunmehr solange mit frischem Schlamm gefüllt wird, bis der Niveauschalter 5 seine obere Grenzlage (max.) erreicht hat,worauf die Pumpe abgeschaltet und das Ventil 3 geschlossen wird. Während des Einfüllens ist auch das Entlüftungsventil 43 offen, das mit dem Ventil 3 in der Leitung 2 synchron und gleichsinnig gesteuert wird. Während die Beschickungsschleuse 4 mit frischem Schlamm über die Leitung 2 beschickt wird, sind die Ventile 10 und 16 geöffnet. Sobald das Ventil 3 und das Entlüftungsventil 43 geschlossen sind, werden die Ventile 6 und 44 geöffnet. Der Kompressor 12 am Beschickungsbehälter 11 läuft und baut den angeforderten bzw. benötigten Druck auf. Aus der Beschickungsschleuse 4 fließt der Schlamm in den Behälter 8 über die Leitung 7 und gleichzeitig wird der im Behälter 8 bereits eingedickte Schlamm aus dem Bodenbereich dieses Behälters in den Belüftungsbehälter 11 übergeführt, bis der Niveauschalter 45 im Begasungsbehälter 11 die Ventile 10 und 26 schließt, wenn der Niveauschalter 45 seinen maximalen Stand (max.) in diesem Behälter erreicht hat. Über das bislang offene Ventil 26 fließt das Trübwasser aus dem Behälter ab, und zwar gegen atmosphärischen Druck, wobei die hier vorgesehene Drossel 27 die Aufgabe hat, die Abflußmenge klein zu halten bzw. zu regeln. Während über das Ableitungsrohr 25 Trübwasser abgeleitet wird, fließt aus der Beschickungsschleuse 4 Schlamm in den Behälter 8 nach bis der Niveauschalter 5 seine untere Grenzlage (min.) wieder erreicht hat. Dies geschieht in Zeitintervallen von ca. 10 bis 15 Minuten. Während der Beschickung des Behälters 8 über die Beschickungsschleuse 4 wird gleichzeitig sedimentierter, also eingedickter Schlamm aus dem Begasungsbehälter 11 über das geöffnete Ventil 16 in den zweiten Behälter 15 eingebracht. Die Taktfolge, in welcher im Betrieb der Anlage die Ventile 44 und 6 bzw. 3 und 43 geöffnet und geschlossen werden, ist im Wechsel synchron mit dem Öffnungs- bzw. Schließtakt des Ventils 16. Aus dem oben erläuterten Verfahrensablauf ist auch erkennbar, daß der Druck, der über dem Kompressor 12 aufgebaut wird, auch zum Transport des Schlammes vom Begasungsbehälter 11 in den Flotationsbehälter 15 verwendet werden kann. Um den Schlamm aus der Beschickungsschleuse in den Behälter 8 zu transportieren, können Pumpen eingesetzt werden oder die beiden Behälter werden auf verschiedene Niveaus installiert, so daß der Schlamm unter der Wirkung der Schwerkraft den gewünschten Weg einnimmt.

Das Diagramm nach Fig. 7 veranschaulicht die Stellung der einzelnen Schaltglieder (Ventile, Niveauschalter) der Anlage in Abhängigkeit der oben erläuterten Arbeitakte, wobei die Nummern 1 bis 3 in der linken Zeile dieses Diagrammes die aufeinanderfolgenden Arbeitakte bezeichnen. Eine Arbeitsperiode umfaßt die Takte 1 bis 3.

Sind beim erläuterten Ausführungsbeispiel der Schacht 20 bzw. das Mantelrohr 37 jeweils im Mittelbereich des Behälters angeordnet, so wäre es durchaus denkbar, diese Anordnung sozusagen umzukehren: Der Durchmesser des Schachtes 20 wird vergrößert, so daß er sich nur wenig vom Innendurchmesser des Behälters 8 unterscheidet. Behälterinnenwand und Schacht 20 begrenzen dann einen schmalen Ringraum. Die Abdeckungen 22 werden dann im Inneren des Schachtes 20 geordnet werden (siehe Fig. 5). Eine dazu korrespondierende und sinngemäße Anordnung ist auch im Zusammenhang mit dem Flotationsbehälter 15 möglich. Dies veranschaulicht die Fig. 6 im Detail.

Legende zu den Hinweisziffern

| | |
|---|---|
| 1 | Schlammsammelbecken |
| 2 | Leitung |
| 3 | Ventil |

4    Beschickungsschleuse
5    Niveauschalter
6    Ventil
7    Leitung
8    Behälter ('Sedimentationsbehälter)
9    Abzugleitung
10   Ventil
11   Begasungsbehälter
12   Kompressor
13   Druckluftleitung
14   Verbindungsleitung
15   Behälter (Flotationsbehälter)
16   Ventil
17   Hohlkegel
18   Deckel
19   Verteilerrinne
20   Schacht
21   Öffnungen
22   Abdeckung
23   Schenkel
24   Schenkel
25   Ableitungsrohr
26   Absperrventil
27   Drossel
28   Mündungsöffnung
29   Zuführleitung
30   Ableitungsrohr
31   Überlauf
32   Ablaufleitung
33   Schacht
34   Austragleitung
35   Trichterartige Erweiterung
36   Räumer
37   Mantelrohr
38   Öffnungen
39   Leitbleche
40   Boden
41   Schlammabsaugleitung
42   Pumpe
43   Entlülftungsventil
44   Ventil
45   Niveauschalter
46   Rand

**Patentansprüche**

1. Verfahren zum Eindicken von Abwasserschlämmen und/oder anderen organischen Schlämmen durch Trennung von Wasser und Feststoffteilen, gekennzeichnet durch die Kombination folgender Merkmale:
Der Abwasserschlamm wird vorerst in einem Sedimentationsbehälter 8 unter Druck bis ca. 8 bar durch Trennung von Wasser und Feststoffteilchen teilentwässert, worauf der teilentwässerte Schlamm abgezogen und unter Eintragung von Sauerstoff unter Druck begast und anschließend in einen Flotationsbehälter (15) übergeführt wird, in welchem in der Folge die durch die Druckbegasung mit Gas angereicherten Feststoffteile durch Flotation eingedickt und ausgeschieden werden.

2. Verfahren nach Anspruch 1, dadurch gekennzeichnet, daß während der Sedimentation im geschlossenen Behälter ein Druck bis max. 7 bar aufgebracht wird.

3. Verfahren nach Anspruch 1, dadurch gekennzeichnet, daß dem zu entwässernden Abwasserschlamm Rohabwasser oder Nährstoffe zur leichteren Trennung von Wasser und Schlammpartikeln beigefügt wird oder werden.

4. Einrichtung zur Durchführung des Verfahrens nach einem der Ansprüche 1 bis 3, dadurch gekennzeichnet, daß ein erster geschlossener, unter Druck setzbarer Behälter (8) (Sedimentationsbehälter) und ein zweiter druckloser, oben offener Behälter (15) (Flotationsbehälter) vorgesehen sind und in der die beiden Behälter (8, 15) verbindenden Leitung (9, 29) ein an eine Druckluftguelle (12) anschließbarer Begasungsbehälter (11) angeordnet ist.

5. Einrichtung nach Anspruch 4, dadurch gekennzeichnet, daß der unter Druck setzbare Behälter (8) turmartig ausgebildet ist, in seinem oberen Bereich eine Zulaufeinrichtung (7, 19) aufweist und in seinem unteren Bereich die Mündungsöffnung einer Abzugleitung (9) angeordnet ist, daß innerhalb des Behälters (8) ein vertikaler Schacht (20) vorgesehen ist, dessen zumindest oberes Ende gegen den Dekkel (18) des Behälters (8) offen ist und der in seiner Wandung eine Vielzahl von Öffnungen (21) aufweist, an deren oberen Rand rinnenartige, im wesentlichen horizontal liegende Abdeckungen (22) vorgesehen sind, die nach unten offen sind und welche sich quer durch den Behälter (8) erstrecken.

6. Einrichtung nach Anspruch 5, dadurch gekennzeichnet, daß die Schenkel (23, 24) der im Querschnitt v-förmigen Abdeckungen (22) ungleich hoch sind,wobei jeweils ein Schenkel annähernd gleich hoch und der gegenüberliegende Schenkel mit zunehmender Entfernung vom Zentrum an Höhe zunimmt.

7. Einrichtung nach Anspruch 4, dadurch gekennzeichnet, daß der drucklose Behälter (15) (Flotationsbehälter) turmartig ausgebildet ist, daß die im Inneren des Behälters liegenden Mündungsöffnungen (28) der Zuführleitung (29) vom Bodenbereich entfernt in etwa dem unteren Drittel der Höhe des Behälters (15) in tangential verlaufender Richtung gleichmäßig über die gesamte Grundfläche des Flotationsraumes verteilt münden und daß im oberen Bereich vorzugsweise in koaxialer Lage mit der Achse des Behälters (15) ein Räumer (35) zur mechanischen Ableitung des durch die Flotation hochgetriebenen Schlammes vorgesehen ist und unterhalb der Mündungsöffnungen(28) der Zuführleitung (29) ein Ableitungsrohr (30) angeschlossen ist, das nach oben geführt ist und das über einen, im Bereich des oberen Füllniveaus des Behälters (15) vorgesehen, vorzugsweise in der Höhe verstellbaren Überlauf (31) in eine Ablaufleitung (32) mündet.

8. Einrichtung nach Anspruch 7, dadurch gekennzeichnet, daß im Mittelbereich des drucklosen Behälters (15) (Flotationsbehälter) ein sich über dessen Höhe erstreckender vertikaler Schacht (33) vorgesehen ist, der an seinem unteren Ende in eine durch die Wand des Behälters (15) führende Austragleitung (34) übergeht und das obere Ende des vertikalen Schachtes (33) sich trichterartig nach außen erweitert und unmittelbar an diese trichterartige Erweiterung (35) des Schachtes (33) der Räumer (36) anschließt, dessen Räumflächen zum Rand der trichterartigen Erweiterung (35) gerichtet sind.

9. Einrichtung nach Anspruch 4, dadurch gekennzeichnet, daß der in die Überströmungsleitungen (9, 29) angeschlossene Begasungsbehälter (11) im Bodenbereich eine Einspeisleitung (13) und im Deckenbereich eine Überströmungsleitung (14) für verdichtetes Gas aufweist,wobei an der Eintrittstelle der Einspeisleitung (13) ein Gasverteilsystem für feinblasigen Eintrag der Gase angeordnet ist.

10. Einrichtung nach Anspruch 4, dadurch gekennzeichnet, daß die automatische Ansteuerung der Absperrorgane (3 - 6 - 10 - 16 - 26 - 43 - 44) in Abhängigkeit des jeweiligen Füllstandes im Begasungsbehälter (11) erfolgt.

11. Einrichtung nach Anspruch 4 und 7 dadurch gekennzeichnet, daß das in den Begasungsbehälter (11) eingeführte Gas durch ein mechanisches Rührwerk unter Druck in den teilentwässerten Schlamm eingetragen wird.

12. Einrichtung nach einem der Ansprüche 4 bis 11, dadurch gekennzeichnet, daß dem unter Druck setzbaren Behälter 8) eine Beschickungsschleuse (4) vorgeschaltet ist, in welche eine Leitung (2) zur Beschickung mit Schlamm mündet und von dessen Bodenbereich die zu dem unter Druck setzbaren Behälter (8) führende Leitung (7) zum Schlammeintrag ausgeht und die Beschickungsschleuse (4) und der Begasungsbehälter (11) in ihrem Deckelbereich über eine Verbindungsleitung (14) kommunizierend verbunden sind, wobei in der Beschickungsschleuse (4) ein in den Verbindungsleitungen zwischen den einzelnen Behältern angeordnete Ventile steuernder Niveauschalter (5) vorgesehen ist.

13. Einrichtung nach Anspruch 4 - 12, dadurch gekennzeichnet, daß der Flotationsbehälter (15) gegen die Atmosphäre abgeschlossen ist und der Druck im Gasraum des Flotationsbehälters (15) niedriger als der atmosphärische - beziehungsweise im Unterdruckbereich gehalten wird.

## Claims

1. Method for concentrating effluent sludge and/or other organic sludges by separating water and solid particles, characterised by the combination of the following features: The effluent sludge is first of all partly dehydrated by separating water and solid particles in a sedimentation vessel 8 at a pressure of approximately 8 bar, whereupon the partly dehydrated sludge is drawn off and treated with gas under pressure by introducing oxygen and is subsequently transferred to a flotation vessel (15) in which consequently the solid particles enriched with gas by the treatment with pressurised gas are concentrated and separated through flotation.

2. Method according to claim 1, characterised in that the sedimentation in the closed vessel takes place at a pressure of up to 7 bar.

3. Method according to claim 1, characterised in that the effluent sludge to be dehydrated has raw sewage or nutrients added in order to assist the separation of water and sludge particles.

4. Device for carrying out the method according to one of the claims 1 to 3, characterised in that there is provided a first sealed vessel (8) (sedimentation vessel) which can be pressurised and a second open at the top vessel (15) (flotation vessel) which is non-pressurised and in which the pipe (9, 29) connecting the two vessels (8, 15) is connected to a gas treatment vessel (11) which can be connected to a compressed air source (12).

5. Device according to claim 4, characterised in that the vessel (8) which can be pressurised is constructed in the form of a tower, in its upper region there being provided an intake device (7, 19) and in its lower region there is arranged the outlet opening of a drainage pipe (9), that within the vessel (8) there is provided a vertical shaft (20) whose upper end at least is open against the lid (18) of the vessel (8) and whose wall has a plurality of openings (21) the upper edges of which are provided with groove-like, essentially horizontally arranged coverings (22) which are open towards the bottom and which extend transversely through the vessel (8).

6. Device according to claim 5, characterised in that the legs (23, 24) of the coverings (22), which are of v-shaped cross-section, are of uneven height, wherein in each case one leg is approximately the same height and the oppositely arranged leg increases in height with increasing distance from the centre.

7. Device according to claim 4, characterised in that the non-pressurised vessel (15) (flotation vessel) is in the form of a tower, that the outlet openings (28) of the feed pipe (29) arranged inside the vessel open out in a tangentially extending direction evenly distributed over the entire surface area of the flotation chamber, spaced from the base area approximately in the lower one third of the height of the vessel (15) and that in the upper region, preferably in coaxial position to the axis of the vessel (15), there is provided a raker (35) for mechanically carrying away the sludge forced up by the flotation and beneath the outlet openings (28) of the feed pipe (29) is connected a drainage pipe (30) which is directed upwards and which flows into a drainage pipe (32) via a preferably height-adjustable overflow (31) provided in the area of the upper filling level of the vessel (15).

8. Device according to claim 7, characterised in that in the centre region of the non-pressurized vessel (15) (flotation vessel) there is provided a vertical shaft (33), extending beyond the height of the flotation vessel, which at its lower end passes over into a discharge pipe (34), passing through the wall of the vessel (15), and the upper end of the vertical shaft (33) expands outwardly in a funnel-like manner and directly connected to this funnel-like expansion (35) of the shaft (33) is the raker (36) whose raking surfaces are directed towards the edge of the funnel-like expansion (35).

9. Device according to claim 4, characterised in that the gas treatment vessel (11) connected to the overflow pipes (9, 29) has a compressed gas feed-in pipe (13) provided in the base region and an excess compressed gas pipe (14) provided in the ceiling region, wherein at the inlet point of the feed-in pipe (13) there is arranged a gas distributer system for introducing the gases containing minute bubbles.

10. Device according to claim 4, characterised in that the automatic activation of the shut off organs (3 - 6 - 10 - 16 - 26 - 43 - 44) takes place in response to the respective filling level in the gas treatment vessel (11).

11. Device according to claim 4 and 7, characterised in that the gas introduced into the gas treatment vessel (11) is introduced under pressure into the partly dehydrated sludge by means of a mechanical stirrer.

12. Device according to one of the claims 4 to 11, characterised in that the vessel (8) which can be pressurised has connected to it a charging sluice (4) into which empties a pipe (2) for charging with sludge and from the base region of which starts the pipe (7), leading to the vessel (8) which can be pressurised, for introducing the sludge, and the ceiling areas of the charging sluice (4) and the gas treatment vessel (11) are connected via a connecting pipe (14) so as to communicate with each other, in which a level switch (5) is provided in the charging sluice (4) for controlling the valves arranged in the connecting pipes between the individual vessels.

13. Device according to claim 4 - 12, characterised in that the flotation vessel (15) is sealed against the atmosphere and the pressure in the gas chamber of the flotation vessel (15) is maintained at a lower pressure than the atmospheric pressure - or lower than that in the low pressure region.

**Revendications**

1. Procédé pour épaissir des boues d'eaux d'égout et/ou d'autres bornes organiques par la séparation de l'eau et des matières solides, caractérisé par la combinaison des caractéristiques suivantes: la boue d'eaux d'égout est tout d'abord partiellement asséchée dans un récipient de sédimentation (8) soumis à une pression allant jusqu'a environ 8 bar, par la séparation de l'eau et des particules solides, après quoi la boue partiellement asséchée est enlevée et soumise à un gazage par un apport d'oxygène sous pression, puis transférée dans un récipient de flottation (15) dans lequel les matières solides enrichies en gaz par un gazage sous pression sont ensuite épaissies et séparées par flottation.

2. Procédé selon la revendication 1, caractérisé en ce qu'une pression allant jusqu'à 7 bar maximum est appliquée pendant la sédimentation dans le récipient fermé.

3. Procédé selon la revendication 1, caractérisé en ce qu'il est ajouté à la boue d'eaux d'égout devant être asséchée de l'eau d'égout brute ou des substances alimentaires en vue d'une séparation plus facile de l'eau et des particules de boue.

4. Dispositif pour la mise en oeuvre du procédé selon l'une des revendications 1 à 3, caractérisé en ce qu'il est prévu un premier récipient (8) (récipient de sédimentation) fermé et apte à être mis sous pression, et un second récipient (15) (récipient de flottation) ouvert par le haut et qui n'est pas sous pression, et un récipient de gazage (11) apte à être relié à une source d'air comprimé (12) est disposé dans la conduite (9, 29) reliant les deux récipients (8, 15).

5. Dispositif selon la revendication 4, caractérisé en ce que le récipient (8) apte à être mis sous pression est conçu comme une tour et possède, dans sa zone supérieure, un dispositif d'alimentation (7, 19) et, dans sa zone inférieure, l'orifice d'une conduite d'évacuation (9), en ce qu'il est prévu, à l'intérieur du récipient (8), une cheminée verticale (20) qui est ouverte, au moins au niveau de son extrémité supérieure, vers le couvercle (18) du récipient (8) et qui possède, dans sa paroi, un grand nombre d'orifices (21) sur le bord supérieur desquels il est prévu des couvercles (22) en forme de goulottes, placés sensiblement à l'horizontale, qui sont ouverts vers le bas et s'étendent transversalement à travers le récipient (8).

6. Dispositif selon la revendication 5, caractérisé en ce que les ailes (23, 24) des couvercles (22) à section transversale en V ont des hauteurs différentes, une aile ayant une hauteur approximativement constante tandis que l'aile opposée présente une hauteur croissante en s'éloignant du centre.

7. Dispositif selon la revendication 4, caractérisé en ce que le récipient qui n'est pas sous pression (15) (récipient de flottation) est conçu comme une tour, en ce que les orifices (28) de la conduite d'alimentation (29) situés a l'intérieur du récipient débouchent, répartis régulièrement sur toute la surface de base de la chambre de flottation et à une certaine distance de la Zone du fond, sur environ le tiers inférieur de la hauteur du récipient (15), dans une direction tangentielle, et en ce qu'il est prévu, dans la zone supérieure, de préférence dans une position coaxiale par rapport à l'axe du récipient (15), un dispositif d'évacuation (35) en vue de l'évacuation mécanique de la boue entraînée vers le haut par la flottation, et un tuyau d'évacuation (30) est raccordé au-dessous des orifices (28) de la conduite d'alimentation (29), lequel tuyau d'évacuation (30) est guidé vers le haut et débouche dans une conduite de décharge (32) par l'intermédiaire d'un trop-plein (31) prévu dans la zone du niveau de remplissage supérieur du récipient (15) et de préférence réglable en hauteur.

8. Dispositif selon la revendication 7, caractérisé en ce qu'il est prévu, dans la zone centrale du récipient qui n'est pas sous pression (15) (récipient de flottation), une cheminée verticale (33) s'étendant sur toute sa hauteur, dont l'extrémité inférieure se prolonge par une conduite de sortie (34) traversant la paroi du récipient (15), et dont l'extrémité supérieure s'élargit vers l'extérieur en forme d'entonnoir, et le dispositif d'évacuation (36) est raccordé directement à cette partie élargie en forme d'entonnoir (35) de la cheminée (33), les surfaces d'évacuation dudit dispositif (36) étant dirigées vers le bord de la partie élargie en forme d'entonnoir (35).

9. Dispositif selon la revendication 4, caractérisé en ce que le récipient de gazage (11) relié aux conduites de décharge (9, 29) possède, dans la zone du fond, une conduite d'alimentation (13) et, dans la zone du couvercle, une conduite de décharge (14) pour du gaz comprimé, un système distributeur de gaz étant disposé à l'entrée de la conduite d'alimentation (13) pour permettre une entrée des gaz par fines bulles.

10. Dispositif selon la revendication 4, caractérisé en ce que la commande automatique des organes de fermeture (3 - 6 - 10 - 16 - 26 - 43 - 44) se fait en fonction de l'état de remplissage respectif du récipient de gazage (11).

11. Dispositif selon les revendications 4 et 7, caractérisé en ce que le gaz introduit dans le récipient de gazage (11) est amené, sous pression, par un mélangeur mécanique dans la borne partiellement asséchée.

12. Dispositif selon l'une des revendications 4 à 11, caractérisé en ce qu'il est prévu, monté en aval du récipient (8) apte 2 être mis sous pression, un sas de chargement (4) dans lequel débouche une conduite (2) destinée au chargement de la boue, et du fond duquel part la conduite (7) destinée à amener la boue et menant au récipient (8) apte a être mis sous pression, et en ce que le sas de chargement (4) et le récipient de gazage (11) sont reliés de façon à communiquer, par l'intermédiaire d'une conduite de liaison (14), dans la zone de leurs couvercles, un commutateur de niveau (5) commandant des soupapes disposées entre les différents récipients, dans les conduites de liaison, étant prévu dans le sas de chargement (4).

13. Dispositif selon les revendications 4 à 12, caractérisé en ce que le récipient de flottation (15) est fermé par rapport à l'atmosphère et la pression régnant dans son compartiment de gaz est maintenue inférieure à la pression atmosphérique, respectivement est de l'ordre du vide partiel.

Fig.1

EP 0 323 610 B1

Fig. 4

Fig. 3

Fig. 2

## Fig. 5

## Fig. 6

## Fig. 7

| Arbeitstakt | Betriebsart: ○ offen  ⊗ geschlossen | Niveauschalter Beschickungsschl. 5 | Beschickung Schleuse 3 | Schleuse zu Eindicker 6 | Eindicker- Begasung 10 | Trübwasser aus Eindicker 26 | Begasung - Schleuse 44 | Entlüftung - Schleuse 43 | Niveauschalter Begasung 45 | Begasung - Flotation 16 | Druckluft = einspeisung 12 |
|---|---|---|---|---|---|---|---|---|---|---|---|
| 1 | Befüllung Schleusenbehälter | min. | ○ | ⊗ | ○ | ⊗ | ⊗ | ○ | min. | ⊗ | ⊗ |
| 2a | Entleerung Schleuse a.) Nachfüllung Begas. | max. | ⊗ | ○ | ○ | ⊗ | ○ | ⊗ | — | ⊗ | ⊗ |
| 2b | b.) Trübwasserabzug aus Eindicker | — | ⊗ | ○ | ⊘ | ○ | ○ | ⊗ | max. | ○ | ○ |
| 3 | Schleuse leer Pause (variabel) | min. | ⊗ | ⊗ | ○ | ⊗ | ⊗ | ○ | min. | ⊗ | ⊗ |
| 1 | neuer Befüllungsintervall Beschickung Schleuse | min. | ○ | ⊗ | ○ | ⊗ | ⊗ | ○ | min. | ⊗ | ⊗ |